# EUROPÄISCHE PATENTSCHRIFT

(11) **EP 1 813 449 B1**
(45) Veröffentlichungstag und Bekanntmachung des Hinweises auf die Patenterteilung: **17.03.2010**
(21) Anmeldenummer: 06022570.3
(22) Anmeldetag: 28.10.2006
(51) Int. Cl.: B60G 15/06, B60G 17/027

(54) **Einstellbares Federbein für Kraftfahrzeuge**
Adjustable suspension strut for vehicle
Jambe de force réglable pour véhicule

(30) Priorität: 27.01.2006 DE 102006003885
(43) Veröffentlichungstag der Anmeldung: 01.08.2007
(73) Patentinhaber: Dr. Ing. h.c. F. Porsche Aktiengesellschaft, 70435 Stuttgart (DE)
(72) Erfinder: Germano, Francesco, 74321 Bietigheim-Bissingen (DE); Schulz, Achim, 75223 Niefern-Oeschelbronn (DE)

(56) Entgegenhaltungen:
- EP-A- 1 403 103
- WO-A-97/30862
- BE-A2- 903 212
- DE-B3- 10 336 155
- DE-C1- 19 937 397
- DE-C2- 4 231 641

## Beschreibung

Die vorliegende Erfindung betrifft ein einstellbares Federbein für Kraftfahrzeuge gemäß dem Oberbegriff des Anspruchs 1.

Ein derartiges Federbein für ein Federungssystem eines Kraftfahrzeugs ist beispielsweise aus der DE 42 31 641 C2 bekannt und weist einen aufbauseitigen und einen radseitigen Anschluss auf. Darüber hinaus ist zwischen einem radseitigen Widerlager und einem aufbauseitigen Widerlager eine Tragfeder in Form einer Schraubendruckfeder angeordnet und zwischen dem radseitigen Anschluss und dem aufbauseitigen Anschluss ist ein Teleskopstoßdämpfer mit radseitig angeordnetem Zylinderteil vorgesehen. Des Weiteren ist zwischen dem aufbauseitigen Widerlager und dem aufbauseitigen Anschluss eine als Kolben-Zylinder-Organ ausgebildete hydraulische Stellvorrichtung angeordnet. Zur Bildung des Kolben-Zylinder-Organs ist auf der Außenseite eines ersten Zylinders unter Bildung einer Ringstufe eine kolbenartige Verdickung angeordnet, auf der ein aufbauseitiger Bereich eines weiteren Zylinders axial verschiebbar geführt ist, wobei der weitere Zylinder mit seinem radseitigen Bereich auf dem ersten Zylinder unterhalb der Ringstufe geführt ist und einen zwischen dem ersten und dem weiteren Zylinder ausgebildeten Hydraulikraum umschließt. Zur Veränderung eines Abstands zwischen Aufbau und aufbauseitigem Widerlager wird der Hydraulikraum mit Hydraulikmedium befüllt und unter Druck gesetzt, wodurch das aufbauseitige Widerlager vom aufbauseitigen Anschluss entfernt und die Schraubenfeder zusammendrückt wird.

Weitere Federbeine sind beispielsweise aus der DE 37 39 663 C2, der DE 38 31 338 A1 und der WO 97/30862 bekannt.

Die DE 103 36 155 B3 beschreibt ein Federbein, umfassend einen Zylinder als Teil einer ersten Baugruppe, zu der eine zweite Baugruppe axial beweglich ausgeführt ist, wobei an der ersten Baugruppe ein erster Federteller für eine erste Feder befestigt ist und sich die erste Feder mit einer ersten Federrate an einem zweiten Federteller abstützt, der axial zu der ersten Baugruppe beweglich gelagert ist, wobei der zweite Federteller eine zweite Feder mit einer zweiten Federrate trägt, die sich an einem dritten Federteller als Komponente der zweiten Baugruppe abstützt, wobei der dritte Federteller, der zum ersten Federteller beim Federungsvorgang eine Axialbewegung ausführt, und der zweite Federteller bis zumindest einer definierten Federlänge der zweiten Feder mit radialem Spiel zur zweiten Baugruppe ausgeführt sind, wobei die zweite Baugruppe des Federbeins eine Zentrierfläche aufweist, die ab der definierten Federlänge der zweiten Feder den zweiten Federteller radial positioniert.

Die EP 1 403 103 A2 offenbart ein verstellbares Federbein für Kraftfahrzeuge, bestehend aus einem Schwingungsdämpfer und einem mit dem Schwingungsdämpfer verbundenen Federelement, wobei sich das Federbein zwischen zwei Anlenkpunkten erstreckt, wobei der Schwingungsdämpfer und das Federelement gemeinsam am ersten Anlenkpunkt abgestützt sind, wobei am zweiten Anlenkpunkt nur der Schwingungsdämpfer direkt abgestützt ist, während sich das Federelement über den Schwingungsdämpfer und über eine mittels einer Verstellvorrichtung verschiebbare Federauflage nur direkt am zweiten Anlenkpunkt abstützt, wobei ein mit der verschiebbaren Federauflage verbundener Anschlag vorgesehen ist, der bei einer Einfederbewegung an einem am ersten Anlenkpunkt vorgesehenen Anschlag zur Anlage kommt.

Die vorliegende Erfindung beschäftigt sich mit dem Problem, für ein einstellbares Federbein der gattungsgemäßen Art, eine verbesserte Ausführungsform anzugeben, durch welche insbesondere eine unangenehme Geräuschentwicklung des Federbeins auch bei vollständig entspannter Tragfeder vermieden werden kann.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem einstellbaren Federbein der gattungsgemäßen Art eine Hilfsfeder vorzusehen, welche mit der Tragfeder in Reihe geschaltet ist und dadurch auch bei vollständig eingefahrener hydraulischer Stellvorrichtung, d.h. bei auf sich vollständig entspannter Tragfeder, die Tragfeder soweit vorspannt, dass diese jeweils endseitig an ihre Widerlager gedrückt wird, wodurch sich z.B. Klappergeräusche vermeiden lassen. Die als Schraubenfeder ausgebildete Tragfeder ist beim erfindungsgemäßen Federbein zwischen einem radseitigen Widerlager und einem aufbauseitigen Widerlager angeordnet, wobei zwischen diesem aufbauseitigen Widerlager und einem aufbauseitigen Anschluss die hydraulische Stellvorrichtung angeordnet ist, mit welcher ein Abstand zwischen dem aufbauseitigen Anschluss und dem aufbauseitigen Widerlager verändert werden kann. Die erfindungsgemäße Hilfsfeder ist zwischen dem aufbauseitigen Widerlager und der Tragfeder angeordnet und mit letzterer in Reihe geschaltet, wobei sich die Hilfsfeder mit einem Ende am aufbauseitigen Widerlager und mit ihrem anderen Ende an einem zwischen der Hilfsfeder und der Tragfeder angeordneten Ringkörper abstützt. Die Hilfsfeder kommt dabei lediglich dann zum Einsatz, wenn die Tragfeder bei gleichzeitig vollständig eingefahrener hydraulischer Stellvorrichtung vollständig entspannt ist und deshalb spannungslos am Ringkörper und am aufbauseitigen Widerlager anliegen würde. Ein derartiges loses Anliegen wird durch die Hilfsfeder verhindert, indem diese den Ringkörper in Richtung der Tragfeder vorspannt und somit eine Anlage der Tragfeder einerseits am aufbauseitigen Widerlager und andererseits am Ringkörper erzwingt. Ein Klappern bzw. eine Geräuschentwicklung ist unter einer derartig erzwungenen Anlage in der Regel nicht möglich.

Zweckmäßig ist der Ringkörper auf einem ersten Zylinder der hydraulischen Stellvorrichtung axial verschiebbar. Diese axiale Verschiebbarkeit ermöglicht es der Hilfsfeder, die Tragfeder über den verschiebbaren Ringkörper vorzuspannen. Gleichzeitig kann dadurch eine einfache und zuverlässige Kraftübertragung erreicht werden kann.

Gemäß einer vorteilhaften Weiterbildung der erfindungsgemäßen Lösung weist ein Federstahl der Hilfsfeder einen rechteckförmigen Querschnitt auf, wodurch diese bauraumminimiert in eine kompakte sogenannte "Block"-Lage zusammengestaucht werden kann. Da sich die Hilfsfeder normalerweise stets in dieser gestauchten "Block"-Lage befindet, ist es vorteilhaft, wenn sie in dieser Lage einen möglichst geringen Bauraumbedarf aufweist. Gleichzeitig ermöglicht der rechteckige Querschnitt des Federstahls der Hilfsfeder eine verbesserte Kraftübertragung zwischen den einzelnen Federwindungen im gestauchten Zustand, wobei die einzelnen Windungen flächig aneinander anliegen, während sie bei einer runden Querschnittsform des Federstahls lediglich Berührungslinien aufweisen würden.

Erfindungsgemäß ist zur Bildung der hydraulischen Stellvorrichtung auf der Außenseite des zweiten Zylinders unter Bildung einer Ringstufe eine kolbenartige Verdickung vorgesehen, auf der ein aufbauseitiger Bereich des ersten Zylinders axial verschiebbar geführt ist, wobei zwischen dem ersten Zylinder und dem zweiten Zylinder ein ringförmiger Hydraulikraum ausgebildet ist. Dieser ringförmige Hydraulikraum wirkt als Ringzylinder für die hydraulische Stellvorrichtung, wodurch einerseits eine besonders kompakte Bauweise des Federbeins erreicht werden kann und andererseits eine besonders gleichmäßige Verstellbewegung erzielt werden kann.

Zweckmäßig weist das Federbein im Bereich seines aufbauseitigen Anschlusses eine Gleitkalotte auf, welche in Form eines Kugelgelenkes ausgebildet ist, über das das Federbein im montierten Zustand gelenkig am Aufbau gelagert ist. Eine derartige gelenkige Lagerung ist besonders vorteilhaft, da hierdurch einerseits gewisse Fertigungstoleranzen ausgeglichen werden können und andererseits während des Betriebs des Federbeins Einspannmomente des Federbeins im Bereich seines aufbauseitigen Anschlusses vermieden werden können, was sich besonders positiv auf die Lebensdauer des Federbeins auswirkt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch ein erfindungsgemäßes Federbein,
- Fig. 2a - 2e: unterschiedliche Stellungen des Federbeins.

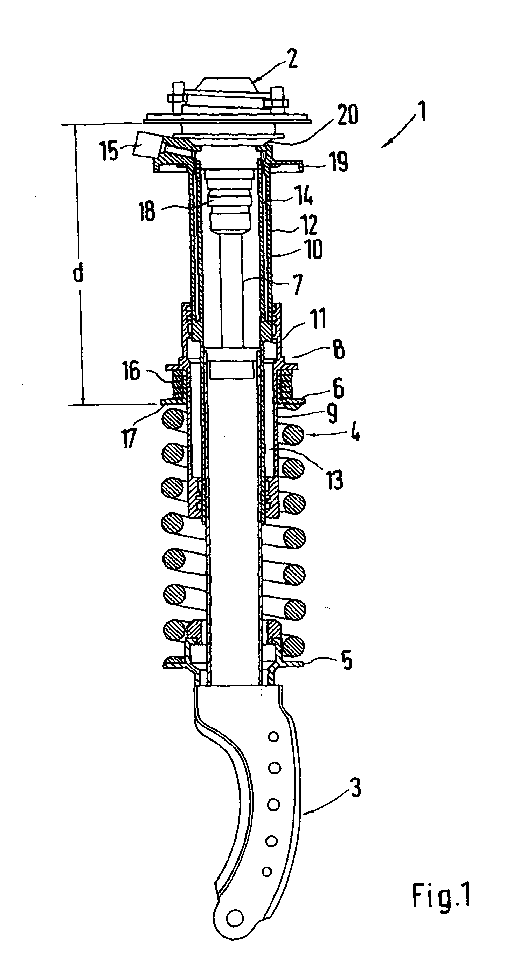

Entsprechend Fig. 1 weist ein erfindungsgemäßes Federbein 1 einen aufbauseitigen Anschluss 2 auf, mit welchem das Federbein 1 an einem nicht dargestellten Fahrzeugaufbau angebunden ist, sowie einen radseitigen Anschluss 3, mit welchem das Federbein 1 an einem ebenfalls nicht dargestellten Fahrwerkselement, beispielsweise einer Achse, insbesondere kardanisch schwenkbar angeordnet ist. Zusätzlich weist das Federbein 1 zumindest eine als Schraubenfeder ausgebildete Tragfeder 4 auf, welche zwischen einem radseitigen Widerlager 5 und einem aufbauseitigen Widerlager 6 angeordnet ist. Radial innerhalb der Tragfeder 4 ist eine Dämpfungseinrichtung 7 mit einem Kolben-Zylinderaggregat vorgesehen, wobei die Dämpfungseinrichtung 7 zumindest teilweise innerhalb der Tragfeder 4 verläuft.

Um einen Abstand d zwischen dem aufbauseitigen Widerlager 6 und dem aufbauseitigen Anschluss 2 verändern zu können, ist eine hydraulische Stellvorrichtung 8 vorgesehen, die einen ersten Zylinder 9 und einen zweiten Zylinder 10 aufweist und wobei das aufbauseitige Widerlager 6 am ersten Zylinder 9 in Form eines radial nach außen abstehenden Kragens angeordnet ist. Der erste Zylinder 9 ist dabei mit seinem aufbauseitigen Bereich axial an einer Außenseite des zweiten Zylinders 10 geführt, wobei die Führung oberhalb und unterhalb einer Ringstufe 11 erfolgt. Oberhalb der Ringstufe 11 ist auf der Außenseite des zweiten Zylinders 10 eine kolbenartige Verdickung 12 angeordnet, auf welcher der aufbauseitige Bereich des ersten Zylinders 9 geführt ist, während unterhalb der Ringstufe 11 der erste Zylinder 9 mit seinem radseitigen Bereich auf einer stufenartig, radial nach innen zurückversetzten Außenfläche des zweiten Zylinders 10 geführt ist. Dabei ist zwischen dem ersten Zylinder 9 und dem zweiten Zylinder 10 ein ringförmiger Hydraulikraum 13 ausgebildet, welcher mit Hydraulikmedium, insbesondere Hydrauliköl, befüllt ist und mit Druck beaufschlagt werden kann, wodurch das aufbauseitige Widerlager 6 gemäß der Fig. 1 nach unten bewegt wird, sofern die durch den Hydraulikdruck im ringförmigen Hydraulikraum 13 entstehende Kraft größer ist als eine entgegenwirkende Federkraft der Tragfeder 4. Ein Befüllen bzw. Entleeren des Hydraulikraumes 13 erfolgt dabei über eine Hydraulikkammer 14, welche in der kolbenartigen Verdickung 12 des zweiten Zylinders 10 angeordnet ist. Diese Hydraulikkammer 14 wird über einen Hydraulikanschluss 15 befüllt bzw. entleert.

Radial innerhalb des zweiten Zylinders 10 ist die Dämpfungseinrichtung 7 angeordnet, wobei der zweite Zylinder 10 einen durch einen Zylinderteil der Dämpfungseinrichtung 7 gebildeten Kolben teleskopartig führt.

Erfindungsgemäß ist nun zwischen dem aufbauseitigen Widerlager 6 und der Tragfeder 4 eine mit der Tragfeder 4 in Reihe geschaltete Hilfsfeder 16 angeordnet, die sich gemäß Fig. 1 einenends am aufbauseitigen Widerlager 6 und anderenends am zwischen der Hilfsfeder 16 und der Tragfeder 4 angeordneten Ringkörper 17 abstützt. Der Ringkörper 17 ist dabei axial verschiebbar auf dem ersten Zylinder 9 der hydraulischen Stellvorrichtung 8 gelagert.

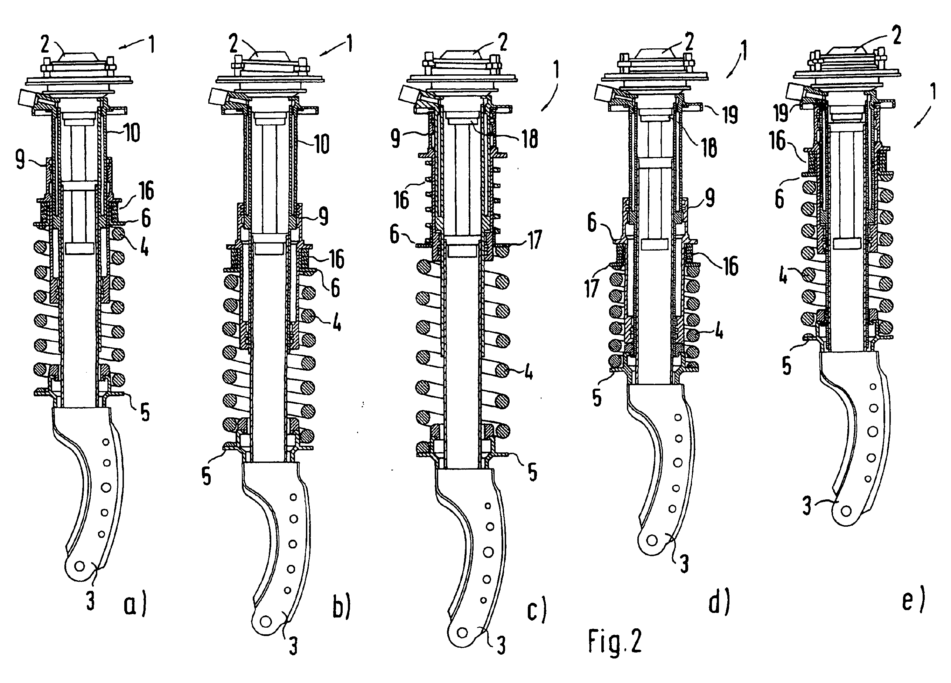

Vorzugsweise weist die Hilfsfeder 16 eine geringere Federkonstante auf als die Tragfeder 4, da sie lediglich dazu dient, bei vollständig eingefahrener hydraulischer Stellvorrichtung 8, d.h. bei minimalen Abstand d, und bei gleichzeitig insgesamt ausgefedertem Federbein 1, den Ringkörper 17 gegen die Tragfeder 4 derart vorzuspannen, dass diese unter Vorspannung einerseits gegen das radseitige Widerlager 5 und andererseits gegen das aufbauseitige Widerlager 6 gespannt wird (vlg. Fig. 2c). Die Hilfsfeder 16 ist zweckmäßig so ausgelegt, dass sie bei normalen Fahrzuständen auf Block zusammengedrückt ist, so dass eine direkte, d.h. nahezu ungefederte, Kraftübertragung von der hydraulischen Stelleinrichtung 8 an das aufbauseitige Widerlager 6 gegeben ist. Um bei vollständig zusammengedrückter Hilfsfeder 16 einen möglichst geringen Bauraumbedarf realisieren zu können, weist der Federstahl der Hilfsfeder 16 einen rechteckigförmigen Querschnitt auf, wodurch die einzelnen Federwindungen der Hilfsfeder 16 in zusammengedrücktem Zustand flächig aneinander anliegen.

Wird der radseitige Anschluss 3 in Richtung des aufbauseitigen Anschlusses 2 bewegt, so wird zunächst die Hilfsfeder 16 auf Block zusammengestaucht und dann die Tragfeder 4 vorgespannt. Um einen harten Anschlag, insbesondere bei Geländefahrten, zu vermeiden, ist innerhalb des zweiten Zylinders 10 ein Puffer 18 vorgesehen, an welchem der Zylinderteil der Dämpfungseinrichtung 7 bei eingefahrener Dämpfungseinrichtung 7 anliegt. Dieser puffert einen Anschlag des Zylinderteils der Dämpfungseinrichtung 7 zunächst ab, bis die Einfederbewegung des Federbeins 1 soweit fortgeschritten ist, dass der erste Zylinder 9 an einem am zweiten Zylinder 10 ringstufenförmig angeordneten Anschlag 19 anliegt. Dies erfolgt bei vollständig eingefahrenem Federbein 1.

Des Weiteren ist denkbar, dass mehrere Federbeine 1 mit einer nicht dargestellten Steuerungseinrichtung verbunden sind, welche zur Steuerung der axialen Position des aufbauseitigen Widerlagers 6 ausgebildet ist. Eine Stellung des jeweiligen Federbeines 1 wird dabei beispielsweise über Sensoren erfasst, die zur Bestimmung der axialen Position des aufbauseitigen Widerlagers 6 ausgebildet sind. Durch die Anbindung mehrerer Federbeine 1 an die Steuerungseinrichtung ist es möglich, dass diese die einzelnen Federbeine 1 derart ansteuert, dass ein Nicht-/Roll-/Wankausgleich des Kraftfahrzeugs herbeigeführt werden kann, was sich positiv auf den Fahrkomfort auswirkt.

Im Bereich seines aufbauseitigen Anschlusses 2 weist das Federbein 1 gemäß Fig. 1 eine Gleitkalotte 20 auf, die in Form eines Kugelgelenkes ausgebildet ist und das Federbein 1 im montierten Zustand gelenkig am Aufbau lagert. Dabei kann der zweite Zylinder 10 aufbauendseitig eine kugelflächige Ausnehmung aufweisen, in welche ein komplementär dazu ausgebildeter Kugelkopf eingreift.

Gemäß Fig. 2a ist ein Zustand des Federbeins 1 gezeigt, welcher im Wesentlichen der Fig. 1 entspricht. Demgegenüber ist gemäß Fig. 2b ein am radseitigen Anschluss 3 angeordnetes und nicht dargestelltes Rad ausgefedert, wobei der erste Zylinder 9 ebenfalls ausgefahren ist.

In Fig. 2c ist ein Zustand gezeigt, bei dem das Rad bzw. der radseitige Anschluss 3 ebenfalls ausgefedert ist, der erste Zylinder 9 jedoch eingefahren ist, so dass dieser am Anschlag 19 des zweiten Zylinders 10 anliegt. Hierbei ist die Hilfsfeder 16 im Vergleich zu den übrigen Darstellungen entspannt, weist jedoch noch soviel Vorspannung auf, dass sie den Ringkörper 17 derart gegen die Tragfeder 4 drückt, dass diese zuverlässig zwischen dem Ringkörper 17 und dem radseitigen Widerlager 5 eingespannt ist. Eine Geräuschentwicklung, beispielsweise ein Klappern, durch eine lose zwischen dem radseitigen Widerlager 5 und dem Ringkörper 17 angeordnete Tragfeder 4 ist somit regelmäßig ausgeschlossen.

In Fig. 2d ist ein Zustand gezeigt, bei welchem der radseitige Anschluss 3 eingefedert ist, der erste Zylinder 9 jedoch ausgefahren ist. Die Tragfeder 4 weist hierbei eine im Vergleich zu den anderen Figuren deutlich stärkere Stauchung auf. Dieser Zustand wird beispielsweise von der Steuerungseinrichtung gewählt, wenn eine harte Federung des Kraftfahrzeugs erwünscht ist, während der Zustand nach Fig. 2c gewählt wird, sofern wird eine im Vergleich dazu weiche Federung gewünscht ist.

Schließlich ist in Fig. 2e ein Zustand gezeigt, bei welchem der radseitige Anschluss 3 bzw. ein daran angeordnetes Fahrzeugrad eingefedert ist und gleichzeitig der erste Zylinder 9 eingefahren ist. Die Hilfsfeder 16 ist auch hierbei auf "Block" zusammengedrückt.

## Patentansprüche

1. Einstellbares Federbein (1) für Kraftfahrzeuge, mit
- einem aufbauseitigen Anschluss (2) und einem radseitigen Anschluss (3),
- zumindest einer als Schraubenfeder ausgebildete Tragfeder (4), die zwischen einem radseitigem Widerlager (5) und einem aufbauseitigen Widerlager (6) angeordnet ist,
- zumindest einer Dämpfungseinrichtung (7) mit einem Kolben-Zylinderaggregat, welche zumindest teilweise innerhalb der Tragfeder (4) verläuft,
- einer zwischen dem aufbauseitigen Widerlager (6) und dem aufbauseitigen Anschluss (2) angeordneten hydraulischen Stellvorrichtung (8) zur Veränderung des Abstandes (d) zwischen aufbauseitigem Anschluss (2) und aufbauseitigem Widerlager (6),
- wobei zwischen dem aufbauseitigen Widerlager (6) und der Tragfeder (4) eine mit der Tragfeder (4) in Reihe geschaltete Hilfsfeder (16) angeordnet ist, die sich einenends am aufbauseitigen Widerlager (6) und anderenends an einem zwischen der Hilfsfeder (16) und der Tragfeder (4) angeordneten Ringkörper (17) abstützt,
**dadurch gekennzeichnet, dass** der Ringkörper (17) auf einem ersten Zylinder (9) der hydraulischen stellvorrichtung (8) axial verschiebbar ist,
- dass ein zweiter Zylinder (10) einen durch ein Zylinderteil der Dämpfungseinrichtung (7) gebildeten Kolben teleskopartig führt,
- dass zur Bildung der hydraulischen Stellvorrichtung (8) auf der Außenseite des zweiten Zylinders (10) unter Bildung einer Ringstufe (11) eine kolbenartige Verdickung (12) angeordnet ist, auf der ein aufbauseitiger Bereich des ersten Zylinders (9) axial verschiebbar geführt ist, der mit seinem radseitigen Bereich auf dem zweiten Zylinder (10) unterhalb der Ringstufe (11) geführt ist, und einen zwischen dem ersten Zylinder (9) und dem zweiten Zylinder (10) ausgebildeten, ringförmigen Hydraulikraum (13) umschließt,
- dass aufbauseitig im zweiten Zylinder (10) ein Puffer (18) vorgesehen ist, an welchem der Zylinderteil der Dämpfungseinrichtung (7) bei eingefahrener Dämpfungseinrichtung (7) anliegt, und
- dass aufbauseitig am zweiten Zylinder (10) ein ringstufenförmiger Anschlag (19) vorgesehen ist, an welchem der erste Zylinder (9) in eingefahrenem Zustand anliegt.

2. Federbein nach Anspruch 1, **dadurch gekennzeichnet, dass** am ersten Zylinder (9) das aufbauseitige Widerlager (6) angeordnet ist.

3. Federbein nach einem der Ansprüche 1 bis 2, **dadurch gekennzeichnet, dass** die Hilfsfeder (16) eine geringere Federkonstante aufweist als die Tragfeder (4).

4. Federbein nach einem der Ansprüche 1 bis 3, **dadurch gekennzeichnet, dass** ein Federstahl der Hilfsfeder (16) einen rechteckförmigen Querschnitt aufweist, was eine kompakte "Block"-Stauchung ermöglicht.

5. Federbein nach einem der Ansprüche 1 bis 4, **dadurch gekennzeichnet, dass** in der kolbenartigen Verdickung (12) des zweiten Zylinders (10) eine Hydraulikkammer (14) angeordnet ist, welche mit dem ringförmigen Hydraulikraum (13) kommuniziert.

6. Federbein nach einem der Ansprüche 1 bis 5, **dadurch gekennzeichnet, dass** eine Steuerungseinrichtung zur Steuerung der axialen Position des aufbauseitigen Widerlagers (6) vorgesehen ist.

7. Federbein nach einem der Ansprüche 1 bis 6, **dadurch gekennzeichnet, dass** die Steuerungseinrichtung zumindest einen Sensor zur Bestimmung der axialen Position des aufbauseitigen Widerlagers (6) aufweist.

8. Federbein nach einem der Ansprüche 1 bis 7, **dadurch gekennzeichnet, dass** die Steuerungseinrichtung so ausgebildet ist, dass sie mehrere Federbeine (1) ansteuern kann und **dadurch** einen Nick-/Wankausgleich des Kraftfahrzeugs ermöglicht.

9. Federbein nach einem der Ansprüche 1 bis 8, **dadurch gekennzeichnet, dass** das Federbein (1) im Bereich seines aufbauseitigen Anschlusses (2) eine Gleitkalotte (20) aufweist, welche in Form eines Kugelgelenks ausgebildet ist, über das das Federbein (1) in montiertem Zustand gelenkig am Aufbau abgestützt ist.

## Claims

1. Adjustable suspension strut (1) for motor vehicles, having
- a body-side connection (2) and a wheel-side connection (3),
- at least one supporting spring (4) which is designed as a helical spring and which is arranged between a wheel-side counter bearing (5) and a body-side counter bearing (6),
- at least one damping device (7) with a piston-cylinder unit which runs at least partially within the supporting spring (4),
- a hydraulic adjusting device (8), which is arranged between the body-side counter bearing (6) and the body-side connection (2), for varying the spacing (d) between the body-side connection (2) and body-side counter bearing (6),
- with a secondary spring (16) which is connected in series with the supporting spring (4) being arranged between the body-side counter bearing (6) and the supporting spring (4), which secondary spring (16) is supported at one end on the body-side counter bearing (6) and at the other end on an annular body (17) arranged between the secondary spring (16) and the supporting spring (4),
**characterized**
- **in that** the annular body (17) is axially movable on a first cylinder (9) of the hydraulic adjusting device (8),
- **in that** a second cylinder (10) guides in a telescopic manner a piston formed by a cylinder part of the damping device (7),
- **in that**, to form the hydraulic adjusting device (8), a piston-like thickened portion (12) is arranged on the outer side of the second cylinder (10) so as to form an annular step (11), on which thickened portion (12) is guided in an axially movable manner a body-side region of the first cylinder (9) which is guided with its wheel-side region on the second cylinder (10) below the annular step (11) and surrounds an annular hydraulic chamber (13) formed between the first cylinder (9) and the second cylinder (10),
- **in that** a buffer (18) is provided at the body side in the second cylinder (10), against which buffer (18) the cylinder part of the damping device (7) bears when the damping device (7) is retracted, and
- **in that** an annular-step-shaped stop (19) is provided at the body side on the second cylinder (10), against which stop (19) the first cylinder (9) bears in the retracted state.

2. Suspension strut according to Claim 1, **characterized in that** the body-side counter bearing (6) is arranged on the first cylinder (9).

3. Suspension strut according to one of Claims 1 to 2, **characterized in that** the secondary spring (16) has a lower spring constant than the supporting spring (4).

4. Suspension strut according to one of Claims 1 to 3, **characterized in that** a spring steel of the secondary spring (16) has a rectangular cross section, which permits compact compression in the "blocked" state.

5. Suspension strut according to one of Claims 1 to 4, **characterized in that** a hydraulic chamber (14) is arranged in the piston-like thickened portion (12) of the second cylinder (10), which hydraulic chamber (14) communicates with the annular hydraulic chamber (13).

6. Suspension strut according to one of Claims 1 to 5, **characterized in that** a control device is provided for controlling the axial position of the body-side counter bearing (6).

7. Suspension strut according to one of Claims 1 to 6, **characterized in that** the control device has at least one sensor for determining the axial position of the body-side counter bearing (6).

8. Suspension strut according to one of Claims 1 to 7, **characterized in that** the control device is designed such that it can activate a plurality of suspension struts (1) and thereby permit pitch/roll compensation of the motor vehicle.

9. Suspension strut according to one of Claims 1 to 8, **characterized in that** the suspension strut (1) has, in the region of its body-side connection (2), a sliding spherical cap (20) which is formed in the manner of a ball joint by means of which the suspension strut (1) is articulatedly supported on the body in the mounted state.

## Revendications

1. Jambe de force réglable (1) pour véhicules automobiles, comprenant :
- un raccord côté carrosserie (2) et un raccord côté roue (3),
- au moins un ressort porteur (4) réalisé sous forme de ressort à boudin, qui est disposé entre une butée côté roue (5) et une butée côté carrosserie (6),
- au moins un dispositif d'amortissement (7) avec une unité cylindre-piston, qui s'étend au moins en partie à l'intérieur du ressort porteur (4),
- un dispositif de commande hydraulique (8) disposé entre la butée côté carrosserie (6) et le raccord côté carrosserie (2), pour faire varier la distance (d) entre le raccord côté carrosserie (2) et la butée côté carrosserie (6),
- un ressort auxiliaire (16) monté en série avec le ressort porteur (4) étant disposé entre la butée côté carrosserie (6) et le ressort porteur (4), et s'appuyant à une extrémité contre la butée côté carrosserie (6) et à l'autre extrémité contre un corps annulaire (17) disposé entre le ressort auxiliaire (16) et le ressort porteur (4),
**caractérisée en ce que**
- le corps annulaire (17) est déplaçable axialement sur un premier cylindre (9) du dispositif de commande hydraulique (8),
- un deuxième cylindre (10) guide de manière télescopique un piston formé par une partie cylindrique du dispositif d'amortissement (7),
- pour la formation du dispositif de commande hydraulique (8), on dispose sur le côté extérieur du deuxième cylindre (10), en formant un étage annulaire (11), un épaississement de type piston (12) sur lequel est guidée de manière déplaçable axialement une région côté carrosserie du premier cylindre (9), qui est guidé avec sa région côté roue sur le deuxième cylindre (10) en dessous de l'étage annulaire (11), et qui entoure un espace hydraulique annulaire (13) formé entre le premier cylindre (9) et le deuxième cylindre (10),
- du côté de la carrosserie dans le deuxième cylindre (10), est prévu un tampon (18) contre lequel s'appuie la partie cylindrique du dispositif d'amortissement (7) lorsque le dispositif d'amortissement (7) est rentré, et
- du côté de la carrosserie au niveau du deuxième cylindre (10), est prévue une butée en forme d'étage annulaire (19) contre laquelle s'applique le premier cylindre (9) dans l'état rentré.

2. Jambe de force selon la revendication 1, **caractérisée en ce que** la butée côté carrosserie (6) est disposée sur le premier cylindre (9).

3. Jambe de force selon l'une quelconque des revendications 1 ou 2, **caractérisée en ce que** le ressort auxiliaire (16) présente une plus faible constante de rappel que le ressort porteur (4).

4. Jambe de force selon l'une quelconque des revendications 1 à 3, **caractérisée en ce qu'**un acier à ressort du ressort auxiliaire (16) présente une section transversale rectangulaire qui permet une compression en bloc compacte.

5. Jambe de force selon l'une quelconque des revendications 1 à 4, **caractérisée en ce que** dans l'épaississement en forme de piston (12) du deuxième cylindre (10) est disposée une chambre hydraulique (14), qui communique avec l'espace hydraulique annulaire (13).

6. Jambe de force selon l'une quelconque des revendications 1 à 5, **caractérisée en ce qu'**un dispositif de commande est prévu pour commander la position axiale de la butée côté carrosserie (6).

7. Jambe de force selon l'une quelconque des revendications 1 à 6, **caractérisée en ce que** le dispositif de commande présente au moins un capteur pour déterminer la position axiale de la butée côté carrosserie (6).

8. Jambe de force selon l'une quelconque des revendications 1 à 7, **caractérisée en ce que** le dispositif de commande est réalisé de telle sorte qu'il puisse commander plusieurs jambes de force (1) et qu'il permette ainsi une compensation du tangage et du roulis du véhicule automobile.

9. Jambe de force selon l'une quelconque des revendications 1 à 8, **caractérisée en ce que** la jambe de force (1) présente dans la région de son raccord côté carrosserie (2) une calotte de glissement (20) qui est réalisée en forme d'articulation sphérique, par le biais de laquelle la jambe de force (1) est supportée de manière articulée sur la carrosserie dans l'état monté.
